# DEMANDE DE BREVET EUROPEEN

(11) **EP 1 530 930 A1**
(43) Date de publication de la demande: **18.05.2005**
(21) Numéro de dépôt: 04292660.0
(22) Date de dépôt: 10.11.2004
(51) Int. Cl.: A47C 9/06

(54) **Siège à assise repliable comportant une miséricorde formant appui scapulaire**

(30) Priorité: 13.11.2003 FR 0313277
(71) Demandeur: Chene, Richard, 92200 Neuilly-sur-Seine (FR); Delamour, Dominique, 78490 Les Mesnuls (FR); Rodi, Olivier, 78950 Gambais (FR); Asientos Esteban, S.L., 31012 Pamplona (Navarra) (ES)
(72) Inventeur: Chene, Richard, 92200 Neuilly sur Seine (FR); Delamour, Dominique, 78490 Les Mesnuls (FR); Rodi, Olivier, 78950 Gambais (FR)
(74) Mandataire: Sauvage, Renée

(57) **Abrégé**

Le siège comporte une coque (2) équipée, d'une part, d'une assise (3) montée pivotante sur ladite coque (2) et, d'autre part, d'un dossier constitué d'un élément inférieur offrant un appui lombaire et d'un élément supérieur (5) offrant, sur l'une de ses faces, un appui scapulaire (5A), ladite coque (2) offrant des points de montage pour l'axe de rotation dudit élément supérieur (5), lequel est susceptible de passer d'une position relevée, dans laquelle il présente sa face "appui scapulaire" (F_{A}), à une position rabattue, de miséricorde, dans laquelle il présente sa face opposée.

## Description

La présente invention a pour objet un siège à assise repliable, destiné notamment à des véhicules de transport en commun, et permettant aux passagers de s'asseoir hors des heures d'affluence.

Plus précisément, l'invention concerne un siège à assise repliable du type comportant une coque, adaptée à être solidarisée à une structure fixe, qui dépend du véhicule, ladite coque étant équipée d'un dossier et d'une assise montée pivotante sur ladite coque.

Dans les véhicules de transport en commun assurant les déplacements quotidiens de passagers, la capacité d'emport du véhicule doit être la plus élevée possible aux heures d'affluence et proposer le plus grand nombre possible de places assises aux heures creuses. A cet effet, il peut être prévu des sièges à assise repliable. Toutefois, les sièges à assise repliable de l'art antérieur ont pour inconvénient, qu'une fois repliés, ils ne sont généralement d'aucune utilité pour les passagers et ne font qu'encombrer l'espace.

On connaît toutefois, d'après WO 99/63867, un siège repliable dont l'assise comporte une miséricorde, permettant aux passagers de se tenir en position assis-debout lorsque le siège est replié. Cette miséricorde est une pièce spécialement conçue à cet effet, et elle n'a aucune fonction en position dépliée du siège. Il s'ensuit que la prévision de la miséricorde augmente le poids du siège et son coût.

L'invention a pour objectif de proposer un siège du type précité, offrant une miséricorde, sans les inconvénients indiqués ci-dessus.

Pour ce faire, l'invention propose un siège du type précité dans lequel, d'une manière connue en soi, le dossier est constitué d'un élément inférieur offrant un appui lombaire et d'un élément supérieur offrant, sur l'une de ses faces, un appui scapulaire, ledit siège étant caractérisé en ce que la coque offre des points de montage pour l'axe de rotation dudit élément supérieur, lequel est susceptible de passer d'une position relevée, dans laquelle il présente sa face "appui scapulaire", à une position rabattue, dans laquelle il présente sa face opposée, formant ainsi une miséricorde.

C'est donc la partie du dossier prévue pour offrir un appui scapulaire qui sert de miséricorde.

Dans une forme d'exécution pratique de l'invention, la face opposée de l'élément supérieur comporte une fosse ischiatique, qui améliore le confort du passager en appui sur la miséricorde.

D'une manière connue en soi, l'assise comporte un bord proximal et un bord distal, respectivement, au voisinage et à l'écart du dossier, et elle est sollicitée vers sa position repliée par un moyen de rappel.

Dans un mode de réalisation particulier de l'invention, l'élément supérieur est également sollicité vers sa position relevée par un moyen de rappel. Ainsi, lorsque le siège est "au repos", l'élément supérieur et l'assise sont automatiquement en position relevée, ce qui a pour résultat un moindre encombrement du siège, tant qu'aucun passager ne veut ni s'asseoir ni profiter de la possibilité que lui offre la miséricorde. Pour pouvoir s'asseoir, les passagers n'ont qu'à abaisser l'assise vers sa position dépliée, l'élément supérieur du dossier conservant sa position relevée en offrant un appui scapulaire. Pour se tenir en position assis-debout, les passagers n'ont qu'à rabattre l'élément supérieur du dossier, l'assise restant repliée

Dans un mode de réalisation particulier de l'invention, l'élément supérieur du dossier comporte, au voisinage de son axe de rotation et sur sa face "appui scapulaire", une dépression adaptée, en position repliée de l'assise et en position rabattue de l'élément supérieur du dossier, à venir coiffer le bord distal de l'assise. Ainsi, hors intervention d'un passager, le siège est à l'état fermé, avec, comme indiqué plus haut, l'élément offrant l'appui scapulaire relevé et l'assise repliée. Lorsque le passager rabat ledit élément, celui-ci vient bloquer l'assise repliée du siège, dans sa position relevée, ce, par emboîtement entre ladite dépression et le bord distal de l'assise. Il s'ensuit, d'une part, une meilleure stabilité de la miséricorde et, d'autre part, l'impossibilité que le passager puisse faire souffrir le siège en faisant jouer l'assise entre une position repliée et une position dépliée tandis que le poids du corps s'exerce sur la miséricorde.

Dans un mode de réalisation pratique de l'invention, le siège comporte un moyen de blocage qui empêche le pivotement de l'élément supérieur vers sa position rabattue lorsque l'assise est dépliée. Ce système de blocage empêche que le siège puisse avoir simultanément son assise dépliée et son élément supérieur rabattu, ce qui pourrait inciter certains passagers à s'asseoir sur la miséricorde en posant leurs pieds sur l'assise.

Dans un mode de réalisation particulier de l'invention, le siège comporte des moyens motorisés commandés à distance agissant sur l'élément supérieur, pour le faire passer de sa position relevée à sa position rabattue, et réciproquement. Ces moyens permettent au conducteur de condamner, aux heures de pointe, les sièges en position fermée : l'assise étant repliée sous l'effet des moyens de rappel, les moyens motorisés, en actionnant l'élément supérieur du dossier vers sa position rabattue, et en le bloquant en cette position, bloquent du même coup l'assise en position fermée.

Dans une réalisation pratique, les moyens motorisés revêtent la forme d'un système de levier actionné par une vis sans fin ou par un vérin.

Dans un mode de réalisation, les moyens motorisés de manoeuvre sont logés entre la coque et le dossier. Le choix de cet emplacement permet de ne pas augmenter l'encombrement du siège et de rendre les parties mobiles inaccessibles à l'usager.

L'invention sera davantage détaillée ci-après, par référence aux dessins annexés, dans lesquels :
- les figures 1a, 1b et 1c représentent, schématiquement et en perspective, un siège selon l'invention, assise dépliée et élément offrant appui scapulaire relevé (figure 1a), assise repliée et élément offrant appui scapulaire relevé (figure 1b) et assise repliée et élément offrant appui scapulaire rabattu (figure 1c) ;
- les figures 2a, 2b et 2c représentent, schématiquement et de profil, un siège selon l'invention, un passager étant assis sur le siège (figure 2a), un passager étant appuyé contre le siège totalement "au repos" (figure 2b) et un passager étant en position assis-debout sur la miséricorde du siège (figure 2c) ;
- la figure 3 est une représentation schématique de profil de la partie supérieure du siège dans la position illustrée aux figures 1c et 2c ; et
- la figure 4 représente, à plus grande échelle, la zone de jonction entre l'élément supérieur et l'élément inférieur du dossier selon l'invention, dans une version motorisée.

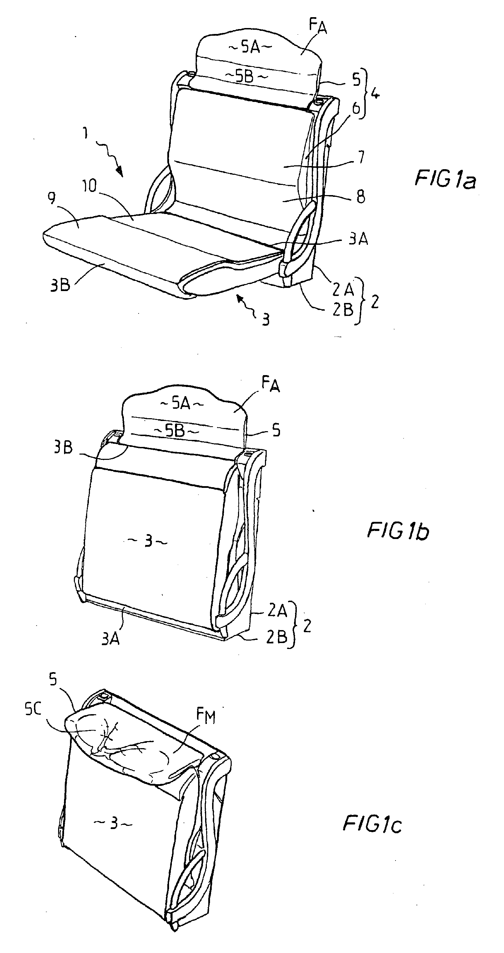

Comme il ressort des figures 1a-1c, le siège 1 comporte une coque 2 grossièrement en équerre, ayant une partie sensiblement verticale 2A et une partie sensiblement horizontale 2B via lesquelles le siège 1 peut être fixé, soit à une paroi verticale appartenant au véhicule, soit au sol du véhicule, soit aux deux.

La partie sensiblement verticale 2A de la coque héberge le dossier 4 du siège, lequel est composé de deux parties indépendantes, à savoir un élément supérieur 5 et un élément inférieur 6.

L'élément supérieur 5 présente, sur sa face visible F_{A} aux figures 1a et 1b, une zone renflée formant appui scapulaire 5A et une zone en creux ou dépression 5B, dont l'utilité apparaîtra plus loin. Sur sa face miséricorde F_{M} visible à la figure 1c, l'élément supérieur 5 présente une zone en creux, ou fosse ischiatique 5C.

L'élément inférieur 6 présente un profil ayant sensiblement la forme d'un S dont la convexité supérieure forme appui lombaire 7 et dont la concavité inférieure ménage un espace 8 pour la partie haute du fessier du passager lorsqu'il est assis sur le siège.

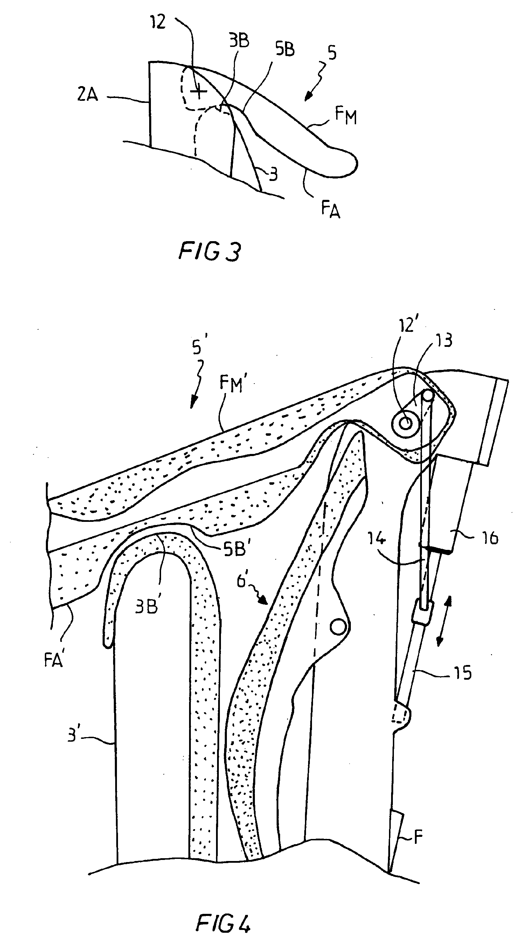

La partie sensiblement horizontale 2B de la coque 2 offre deux points d'ancrage pour un axe de rotation (non représenté) autour duquel est susceptible de pivoter l'assise 3. L'assise 3 comporte un bord proximal 3A au voisinage de l'axe de rotation et un bord distal 3B à l'opposé. Côté distal, l'assise présente une zone en plateau 9 et, côté proximal, une zone en creux 10, ou fosse, adaptée à accueillir les ischions du passager 11 en lui offrant un meilleur confort. La partie sensiblement verticale 2A de la coque offre, de son côté, deux points d'ancrage pour un axe de rotation (non représenté aux figures 1a-1c, mais représenté en 12 à la figure 3) autour duquel est susceptible de pivoter l'élément supérieur 5 entre la position relevée des figures 1a et 1b, et la position rabattue de la figure 1c.

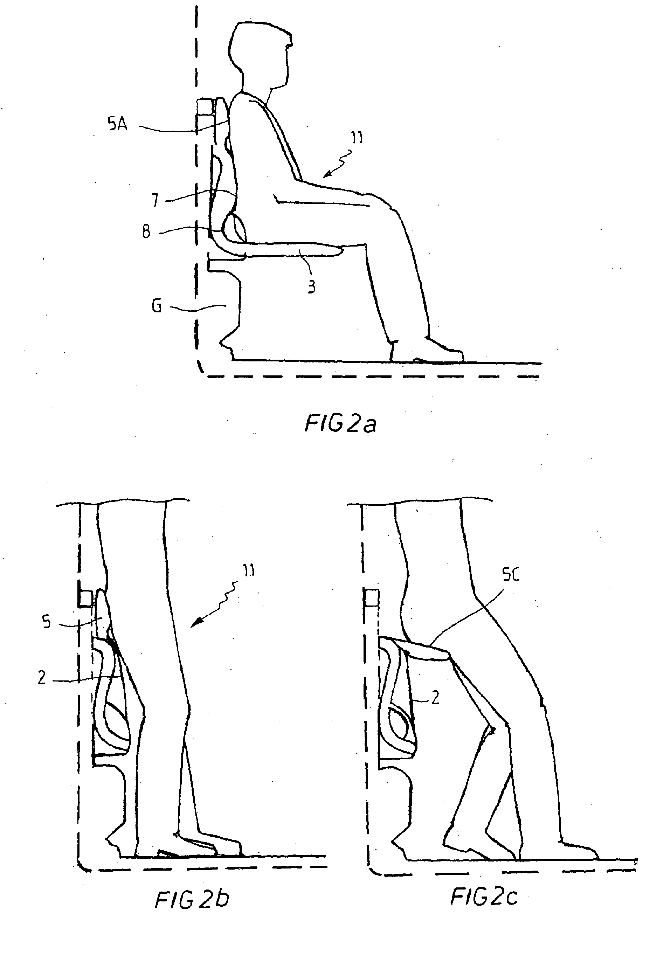

Des moyens de rappel sont prévus pour solliciter l'élément supérieur 5 vers sa position relevée (figures 1a et 1b - figures 2a et 2b) et l'assise vers sa position repliée (figures 1b et 2b - figures 1c et 2c).

Il s'ensuit qu'au repos, le siège se présente comme représenté aux figures 1b et 2b : élément supérieur 5 relevé et assise 2 repliée. Un passager, debout, pourra donc simplement s'appuyer contre le siège.

Dans la position illustrée aux figures 1c, 2c et 3, l'élément supérieur 5 est rabattu de sorte qu'il présente, vers l'extérieur, sa face miséricorde F_{M}. Le passager peut ainsi assumer une position assis-debout dans laquelle il occupe davantage d'espace qu'en position debout (figure 2b) mais moins qu'en position assise (figure 2a). Par ailleurs, comme il ressort mieux de la figure 3, lorsque l'élément supérieur 5 est rabattu, la dépression 5B de sa face F_{A} vient coiffer le bord distal 3B de l'assise 3, ce qui a pour effet de bloquer l'assise en position repliée.

Dans la position illustrée aux figures 1a et 2a, l'assise 3 est dépliée et l'élément supérieur 5 est relevé de sorte que le siège offre un appui scapulaire 5A et un appui lombaire 7 au passager 11 assis.

Il ressort des figures 2a-2c que le siège est fixé à une paroi verticale dépendant du véhicule et qu'il dégage un large espace sous l'assise, permettant d'y loger, par exemple, une gaine de chauffage G.

Pour éviter que les passagers ouvrent les sièges repliables aux heures d'affluence, l'invention prévoit la possibilité pour le conducteur de bloquer les éléments supérieurs 5 des dossiers en position rabattue et, par voie de conséquence, de bloquer les assises 3 en position repliée. Cela peut être fait, par exemple, au moyen d'un système de levier actionné par une vis sans fin.

A la figure 4, les éléments semblables à ceux des figures 1a-1c, 2a-2c et 3 sont désignés par les mêmes références accompagnées du signe prime et F désigne une plaque de fixation à une paroi dépendant du véhicule. Les zones garnies de petits points illustrent des garnitures de type mousse.

La figure 4 représente, fortement agrandie, la zone supérieure du siège dans sa position de la figure 1c, c'est-à-dire avec l'élément supérieur 5' rabattu sur le bord distal 3B' de l'assise 3' préalablement repliée sous l'effet de son ressort de rappel.

Comme indiqué précédemment, en position "de repos" l'assise 3' est ainsi repliée, mais l'élément supérieur 5' est relevé.

Cependant, il est ici prévu, pour le rabattre, des moyens agissant sur l'axe 12' autour duquel pivote l'élément supérieur 5' entre sa position relevée et sa position rabattue.

Ces moyens consistent en une partie formant levier 13 calée sur l'axe 12' et soumise à un tirant 14, lui-même asservi au mouvement d'une vis sans fin 15 actionnée par un moteur électrique 16, l'ensemble vis sans fin 15 et moteur 16 étant logé dans la partie supérieure de la coque 2.

Lorsque, le siège étant au repos en position relevée, le conducteur actionne le moteur 16 dans un sens tel qu'il s'ensuit une rotation de la vis sans fin 15 dans un sens propre à provoquer l'élévation du tirant 14, le levier 13 contraint l'axe 12' à tourner en entraînant l'élément 5' vers sa position rabattue. Ce faisant la dépression 5B' de la face F_{A}' de l'élément 5' vient s'emboîter sur le bord distal 3B' de l'assise 3'. L'élément 5' et l'assise 3' se trouvent ainsi bloqués, respectivement, en position rabattue et en position repliée, le premier par la motorisation, le second par le premier. Dans la pratique, si le conducteur ne veut pas à avoir à vérifier qu'aucun passager n'est assis sur un siège au moment de la manoeuvre du système, il lui suffira d'attendre que le véhicule soit au terminus et vide de passagers.

Manoeuvré en sens inverse, ce système permet de bloquer l'élément 5' en position relevée pour libérer l'assise pour un usage aux heures creuses.

Au lieu d'un système à vis sans fin, il pourrait être utilisé un vérin, c'est-à-dire un moyen débrayable, simplement par cessation de l'alimentation en énergie (électrique, pneumatique, ou hydraulique).

## Revendications

1. Siège à assise repliable du type comportant une coque (2) adaptée à être solidarisée à une structure fixe, ladite coque (2) étant équipée, d'une part, d'une assise (3,3') montée pivotante sur ladite coque (2) et, d'autre part, d'un dossier (4) constitué d'un élément inférieur (6) offrant un appui lombaire (7) et d'un élément supérieur (5,5') offrant, sur l'une de ses faces, un appui scapulaire (5A,5A'), **caractérisé en ce que** ladite coque (2) offre des points de montage pour l'axe de rotation (12,12') dudit élément supérieur (5,5'), lequel est susceptible de passer d'une position relevée, dans laquelle il présente sa face "appui scapulaire" (F_{A}), à une position rabattue, dans laquelle il présente sa face opposée (F_{M}).

2. Siège selon la revendication 1, **caractérisé en ce que**, sur ladite face opposée (F_{M}), ledit élément supérieur (5,5') comporte une fosse ischiatique (5C).

3. Siège selon la revendication 1 ou 2, **caractérisé en ce que** ledit élément supérieur (5,5') est sollicité vers sa position relevée par un moyen de rappel.

4. Siège selon l'une quelconque des revendications 1 à 3, dans lequel l'assise (3,3') comporte un bord proximal (3A) et un bord distal (3B,3B'), respectivement, au voisinage et à l'écart dudit dossier (4), et l'assise (3,3') est sollicitée vers sa position relevée par un moyen de rappel, **caractérisé en ce que**, au voisinage de son axe de rotation (12,12'), l'élément supérieur (5,5') comporte, sur sa face "appui scapulaire (5A,5A'), une dépression (5B,5B') adaptée à venir coiffer le bord distal (3B,3B') de l'assise (3,3') en positions repliée de l'assise (3,3') et rabattue de l'élément supérieur (5,5').

5. Siège selon l'une quelconque des revendications 1 à 4, **caractérisé en ce qu'**il comporte un moyen de blocage empêchant le pivotement dudit élément supérieur (5,5') vers sa position rabattue lorsque l'assise (3,3') est dépliée.

6. Siège selon l'une quelconque des revendications 1 à 5, dans lequel l'assise (3') comporte un bord proximal et un bord distal (3B'), respectivement, au voisinage et à l'écart dudit dossier (4), et l'assise (3') est sollicitée vers sa position relevée par un moyen de rappel, **caractérisé en ce qu'**il comporte des moyens motorisés (13-16) actionnables à distance, agissant sur l'élément supérieur (5') pour le faire passer de sa position relevée à sa position rabattue, et réciproquement.

7. Siège selon la revendication 6, **caractérisé en ce que** lesdits moyens motorisés revêtent la forme d'un système de levier (13,14) actionné par une vis sans fin (15) ou par un vérin.

8. Siège selon la revendication 6 ou 7, **caractérisé en ce que** les moyens motorisés (13-16) de manoeuvre sont logés entre ladite coque (2) et ledit dossier (4).
